# EUROPEAN PATENT APPLICATION

(11) **EP 4 598 125 A1**
(43) Date of publication of application: **06.08.2025**
(21) Application number: 25155853.2
(22) Date of filing: 04.02.2025
(51) Int. Cl.: H04W 36/00, H04W 36/08

(54) **METHOD AND APPARATUS FOR CONFIGURING LTM (L1/L2 TRIGGERED MOBILITY) IN INTER-GNB MOBILITY**

(30) Priority: 05.02.2024 KR 20240017747; 13.01.2025 KR 20250004547
(71) Applicant: KT Corporation, Seongnam-si, Gyeonggi-do 13606 (KR)
(72) Inventor: HONG, Sung-pyo, Seongnam-si, Gyeonggi-do 13606 (KR)
(74) Representative: BCKIP Part mbB

(57) **Abstract**

Disclosed are a method and apparatus for configuring a layer 1 (L1)/layer 2 (L2) triggered mobility (LTM) in a wireless communication system. A source base station transmits a handover request message including an LTM information request to a target base station, receives a handover request acknowledge message including an LTM information response from the target base station, and transmits at least a portion of the received LTM information response to a UE through a radio resource control (RRC) message.

## Description

### CROSS-REFERENCE TO RELATED THE APPLICATION

This application is based on and claims priority on Patent Application No. 10-2024-0017747 filed on Feb. 5, 2024 and No. 10-2025-0004547 filed on Jan. 13, 2025 in the Korean Intellectual Property Office.

### BACKGROUND

### Technical Field

The present specification relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios which are classified into Enhanced Mobile BroadBand (eMBB), Ultra-reliability and low-latency communication (URLLC), Massive Machine-Type Communications (mMTC), and the like.

eMBB, URLLC, and mMTC are represent next generation mobile communication scenarios. eMBB is characterized by high spectrum efficiency, high user experienced data rate, high peak data. URLLC is characterized by ultra-reliable, ultra-low latency, ultra-high availability (e.g., vehicle-to-everything (V2X), Emergency Service, Remote Control). mMTC is characterized by low cost, low energy, short packet, and massive connectivity (e.g., Internet of Things (IoT)).

### SUMMARY

The present disclosure relates to L1/L2 Triggered Mobility (LTM) for a UE in a wireless communication system. The present disclosure is to provide a method and apparatus for configuring LTM upon extending LTM to inter-different base stations/gNB-central unit (CU) LTM.

In accordance with an embodiment, a configuration method may be provided for a source base station in a wireless communication system. The method may include transmitting a handover request message including a layer 1 (L1)/layer 2 (L2) triggered mobility (LTM) information request to a target base station, receiving a handover request acknowledge message including an LTM information response from the target base station, and transmitting at least a portion of the received LTM information response to a UE through a radio resource control (RRC) message.

In accordance with another embodiment, a configuration method may be provided for a target base station in a wireless communication system. The method may include receiving a handover request message including an LTM information request from a source base station and transmitting a handover request acknowledge message including an LTM information response to the source base station, in which at least a piece of the transmitted LTM information response is transmitted to a UE through a radio resource control (RRC) message.

In accordance with further another embodiment, a source base station may be provided in a wireless communication system. The source base station may include at least one processor; and at least one memory configured to store instructions and operably electrically connectable to the at least one processor, wherein operations performed based on the instructions executed by the at least one processor include: transmitting a handover request message including a layer 1 (L1)/layer 2 (L2) triggered mobility (LTM) information request to a target base station; receiving a handover request acknowledge message including an LTM information response from the target base station; and transmitting at least a portion of the received LTM information response to a UE through a radio resource control (RRC) message.

In accordance with still another embodiment, a target base station may be provided in a wireless communication system. The target base station may include at least one processor; and at least one memory configured to store instructions and operably electrically connectable to the at least one processor, wherein operations performed based on the instructions executed by the at least one processor include: receiving a handover request message including an LTM information request from a source base station; and transmitting a handover request acknowledge message including an LTM information response to the source base station, in which at least a piece of the transmitted LTM information response is transmitted to a UE through a radio resource control (RRC) message.

The LTM information request may include at least one of a reference configuration, at least one LTM candidate cell identity (ID), and at least one LTM configuration ID. Here, the at least one LTM candidate cell ID and the at least one LTM configuration ID may be included in the LTM information request in a list form. Further, the at least one LTM candidate cell ID may be at least one new radio (NR) cell global identifier (CGI), and the at least one NR CGI may be to identify up to eight LTM candidate cells.

The at least one LTM configuration ID may each have a unique value between the source base station and all the target base stations.

Meanwhile, the handover request message may be transmitted for each candidate cell of the target base station.

The target base station that received the handover request message may transmit a secondary node (SN) addition request message to a secondary base station. Further, the target base station that received the handover request message may transmit an SN release request message to the secondary base station.

The LTM information response may include at least one of LTM candidate configuration information and reference configuration information.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 illustrates the procedure for inter-gNB LTM according to an embodiment of the disclosure.
FIG. 8 is a block diagram showing apparatuses according to an embodiment of the disclosure.
FIG. 9 is a block diagram showing a terminal according to an embodiment of the disclosure.
FIG. 10 is a block diagram of a processor in accordance with an embodiment.
FIG. 11 is a detailed block diagram of a transceiver of a first apparatus shown in FIG. 8 or a transceiving unit of an apparatus shown in FIG. 9.

### DETAILED DESCRIPTION

The technical terms used in this document are for merely describing specific embodiments and should not be considered limiting the embodiments of disclosure. Unless otherwise defined, the technical terms used in this document should be interpreted as commonly understood by those skilled in the art but should not be interpreted too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

Abase station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

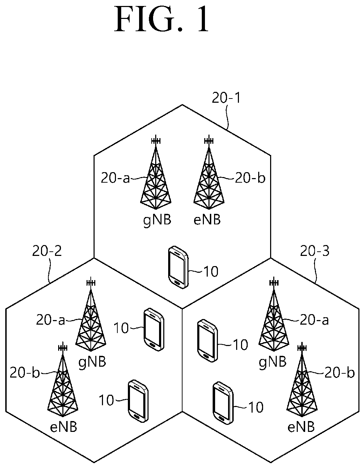

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

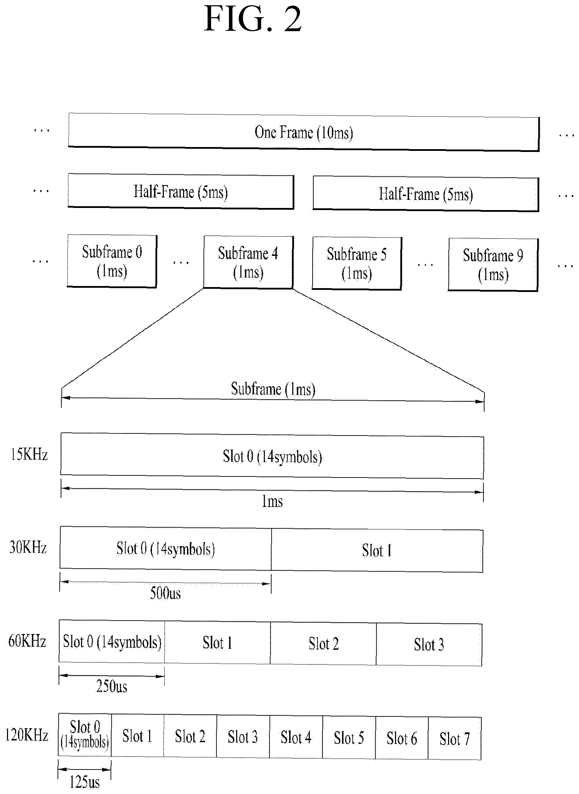

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**Table 3**

| µ | Δf=2^{µ}·15 [kHz] | N^{slot}symb | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

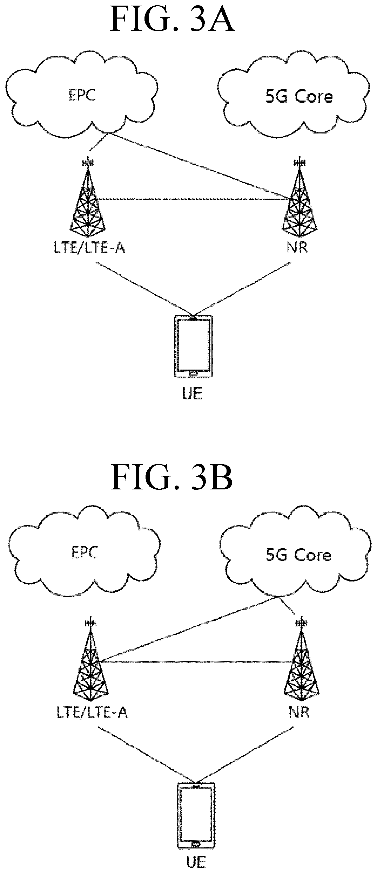

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

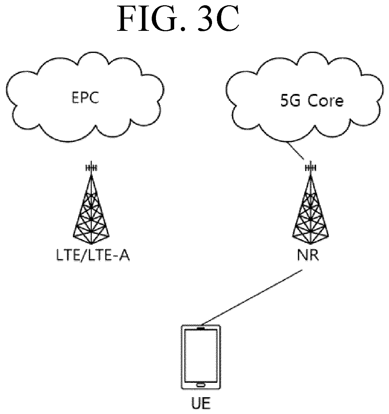

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

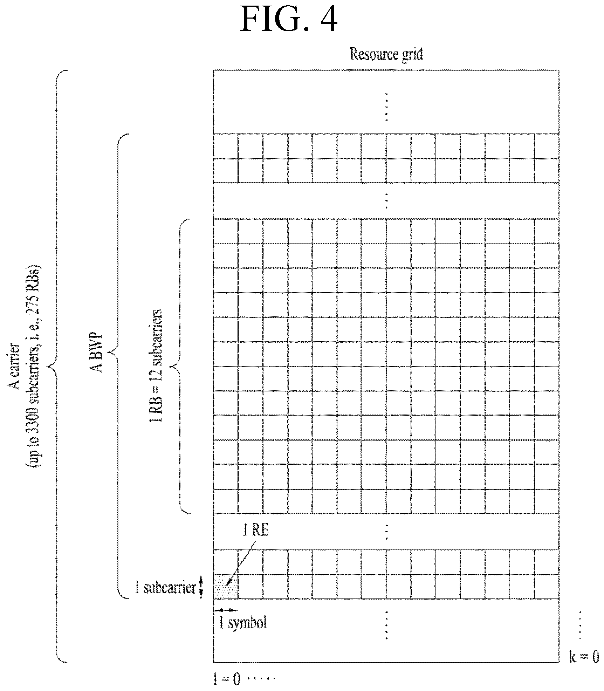

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

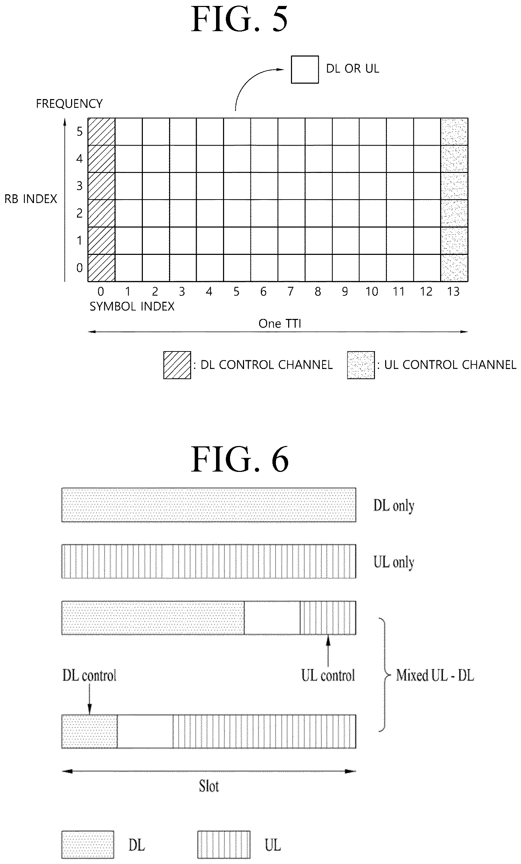

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region

   DL region: (i) DL data region, (ii) DL control region + DL data region
   UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

### LTM (L1/L2 Triggered Mobility)

The present disclosure relates to L1/L2 Triggered Mobility (LTM) for a UE.

In 3GPP, standardization of L1/L2 Triggered Mobility (LTM) functions was carried out in release-18 (Rel-18). Hereinafter, L1/L2 Triggered Mobility is referred to as LTM. However, this is only for the convenience of description. The embodiments are not limited thereto. The term "LTM" may be replaced by any other terms, such as Layer 1 Mobility, Layer 2 Mobility, and lower layer Mobility. In particular, the LTM refers to a procedure of the gNB, which receives an L1 measurement report from the UE, and changes a serving cell (e.g., PCell/PSCell) of the UE by a cell switch command signaled through a medium access control (MAC) control element (CE) based on the L2 measurement report. The cell switch command instructs the configuration of an LTM candidate prepared in advance by the gNB and provided to the UE through radio resource control (RRC) signaling. The UE switches to the target cell based on the cell switch command.

The Rel-18 LTM supports both intra-gNB-Distributed Unit (DU) Mobility and intra-gNB-Central Unit (CU) Mobility. That is, in the prior art, the LTM supported only cell change within the gNB-CU (intra-gNB-CU mobility). Therefore, to provide mobility between different base stations/gNB-CUs (e.g., inter-gNB-CU mobility) to the UE, a handover method based on a typical layer 3 (L3) should be used rather than LTM. The typical layer 3 based handover is a network-based handover in which a source base station sends an RRC reconfiguration message containing information required to access a target cell (e.g., reconfigurationwithsync, a handover command) to trigger a handover, or a conditional handover executed by the UE when handover execution conditions are met. Thus an interruption time may increase compared to that of the LTM during the cell change process. Here, the aforementioned gNB-CU refers to a logical node that hosts the radio resource control (RRC), service data adaptation protocol (SDAP), and packet data convergence protocol (PDCP) layers of the base station (or a logical node that hosts one or more of the radio access upper layer protocols). To support efficient network construction, NR provides a structure for dividing the base stations (gNB) into centralized nodes (hereinafter referred to as CU/gNB-CU for the convenience of description) and distributed nodes (hereinafter referred to as DU/gNB-DU for the convenience of description). The wireless network includes one set of base stations connected to a 5G Core network (5GC) through an NG interface. The Base stations are interconnected through an Xn interface. One base station may include one gNB-CU and one or more gNB-DUs. The gNB-CU and the gNB-DU are connected through an F1 interface. One gNB-DU is connected to only one gNB-CU. The NG interface and Xn-C interface for one base station including the gNB-CU and gNB-DU are terminated at the gNB-CU. The gNB-DUs connected to the gNB-CU are regarded as only one base station to other base stations and 5GC. The gNB-DU refers to a logical node that hosts the radio link control (RLC), medium access control (MAC), and physical (PHY) layers of a base station (or a logical node that hosts one or more radio access protocols not included in the gNB-CU). One gNB-DU supports one or multiple cells. One cell is supported by only one gNB-DU.

In addition, the LTM procedure is divided into an LTM preparation step to prepare an LTM candidate configuration, an early synchronization step, an LTM cell switch execution step, and an LTM cell switch completion step. Because the typical intra-base station LTM technology included only candidate cells belonging to one base station as LTM candidate cells, it was possible to easily generate the candidate cells and the candidate configuration associated with those cells. However, in order to support the inter-base station LTM, it may be difficult to generate candidate cells and candidate configurations associated with the corresponding cells between different base stations. In particular, it may be difficult to generate an LTM candidate configuration supporting a subsequent LTM (LTM cell switch procedures between candidate cells without RRC reconfiguration by the network in between.), which is capable of providing fast cell changes between the candidate cells without RRC reconfiguration between different base stations.

As described above, the typical LTM supports only the intra gNB-CU mobility. To provide the inter-gNB-CU mobility, an L3-based handover method should be used rather than the LTM. As a result, the interruption time increases during the cell change process compared to the LTM, and it is difficult to configure the LTM supporting subsequent LTM. To solve these problems, the disclosure is conceived to proposes a method and apparatus for configuring the LTM to support the inter-base station LTM (e.g., inter-gNB-CU LTM).

Hereinafter, a method of providing mobility will be described in detail based on 5G NR wireless access technology. However, embodiments of the disclosure are not limited thereto. Such a description is only for clarity and convenience. For example, the embodiments of the disclosure may be applied to the cell change/switch based on any wireless access technology (e.g., 6G). The embodiments of the disclosure may be described with reference to the information elements, procedures, and operation contents specified in the NR standards (e.g., NR MAC standards, i.e., TS 38.321, and the NR RRC standards, i.e., TS 38.331). Although the definition of the information element, the related procedures, and the related UE operation contents are not described in this specification, the corresponding contents specified in the standard specifications, which are publicly known technologies, may be included in the disclosure. The embodiments set forth herein may be implemented individually or in any combination thereof, and it is obvious that this also falls within the scope of the disclosure.

Any functions described below may be defined as an individual UE radio capability or UE Core network capability and transmitted to the base station/core network entity (for example, Access and Mobility Management Function (AMF)/ Session Management Function (SMF)) by the UE through corresponding signaling. Alternatively, any functions may be combined, defined as the UE capability, and transmitted to the base station/core network entity through the corresponding signaling by the request of the UE.

The base station may transmit/instruct information indicating the allowance /support/configuration/activation states of the corresponding functions/function combination for any functions or a combination of functions set forth herein to the UE through an RRC message. For example, this information may be instructed to the UE before or after the configuration/application of the corresponding functions/function combination, or simultaneously with the configuration/application of the functions/function combination. The RRC message may be broadcast through system information. Alternatively, the information may be instructed to the UE through a dedicated RRC message.

The typical 3GPP Rel-18 LTM instructs the cell switch command based on the MAC CE. However, the disclosure may also include an LTM method of instructing the cell switch command through not only the MAC CE but also downlink control information (DCI).

### Method of processing inter-base station LTM candidate configuration identification information

The source/serving base station and the target/candidate base station may use the LTM candidate configuration identification information, which has a unique value associated with different candidate cells. Otherwise, if duplicate values are used to identify the candidate configuration, unnecessary signaling may need to be added for error processing.

For example, the inter-base station LTM may be applied only to two base stations, and the LTM candidate configuration identification information associated with and belonging to a corresponding base station may be uniquely identified through inter-base station signaling. For example, in the case of applying the inter-base station LTM configuration, the maximum value of the target/candidate base station different from the source/serving base station may be set to one (1). With this, efforts by the source/serving base station to perform signaling and coordination with one or more target/candidate base stations may be reduced. The number of LTM candidate configuration identification information, which may be set for the source/serving base station, may be a specific number (for example, 8, i.e., the maximum number of LTM candidate cells, or 4, i.e., half of the maximum number). The two base stations may determine/allocate identification information for uniquely identifying an LTM candidate configuration within the corresponding number.

For another example, an Xn application protocol (XnAP) message transmitted by the source/serving base station/gNB-CU to the target/candidate base station/gNB-CU to request the LTM candidate addition/modification (for example, a handover request or a new XnAP message (e.g., an LTM candidate addition request) distinct from the handover request) may include at least one of a target/candidate cell global identifier for a candidate cell belonging to the target/candidate base station/gNB-CU/gNB-DU (for example, NR CGI or E-UTRAN CGI), and LTM information request information.

The target/candidate base station/gNB-CU may generate at least one of i) a target/candidate cell global identifier (for example, NR cell global identifier (CGI) or E-UTRAN CGI) for the LTM candidate cell, ii) an LTM the candidate configuration RRC container (ltm-CandidateConfig) including an RRC reconfiguration message used to configured the LTM candidate cell, iii) ltm-CandidatePCI indicating a physical cell identifier (PCI) of a special cell included in ltm-CandidateConfig, iv) ltm-DL-OrJointTCI-StateToAddModList/ltm-UL-TCI-StatesToAddModList indicating a list of transmission configuration indicator (TCI) states to be added/modified for the LTM, v) ltm-ConfigComplete for instructing whether the LTM candidate configuration is a complete configuration, vi) ltm-EarlyUL-SyncConfig indicating information used in performing early uplink synchronization, vii) ltm-SSB-Config indicating information to instructing an SS/PBCH block configuration used for L1 measurement, and viii) an LTM CSI resource list (ltm-CSI-ResourceConfigList) including an LTM CSI resource configuration (LTM-CSI-ResourceConfig) in addition to an acknowledgement XnAP message of the XnAP message for requesting the LTM candidate addition/modification (for example, a handover request acknowledge or a new XnAP message distinct from the handover request acknowledge (e.g., LTM candidate addition request acknowledge). The target/candidate base station/gNB-CU may transmit the generated one to the source/serving base station/gNB-CU.

If there are one or more candidate cells belonging to the target/candidate base station/gNB-CU, each LTM candidate addition/modification request XnAP message and/or each acknowledgement/response XnAP message may be transmitted for each candidate cell. Alternatively, if there are one or more candidate cells belonging to the target/candidate base station/gNB-CU, one LTM candidate addition/modification request XnAP message and/or one acknowledgement/response XnAP message may be transmitted including each candidate cell information.

The source/serving base station/gNB-CU may instruct the LTM candidate configuration (LTM-Candidate) including the unique LTM candidate configuration identification information to the UE based on information or similar information received from the target/candidate base station/gNB-CU. The source/serving base station/gNB-CU may determine the ltm-CandidateId information (or corresponding information value) identifying/indicating the LTM candidate configuration included in the LTM candidate configuration to the UE.

To support the subsequent LTM, the target/candidate base station/gNB-CU needs to share the determined candidate cell information (for example, NR CGI or PCI) and the LTM configuration identification information associated with the corresponding candidate cell with the source/serving base station/gNB-CU. To this end, the source/serving base station/gNB-CU may transmit i) the candidate cell global identifier (for example, NR CGI or E-UTRAN CGI) for the candidate cell and ii) the LTM configuration identification information for the corresponding candidate cell (or one or more candidate cell global identifiers and the LTM configuration identification information mapping list for the corresponding candidate cell) to the target/candidate base station/gNB-CU. The corresponding XnAP message may be defined as signaling associated with the UE. Alternatively, the corresponding XnAP message may be defined as signaling that includes information for identifying the corresponding UE (or information configured/allocated in the corresponding UE) and that is not associated with the UE.

For another example, when the inter-base station LTM configuration is applied, the LTM configuration may be applied through one or more target/candidate base stations different from the source/serving base station. The source/serving base station may configure the UE with the LTM candidate configuration associated with the candidate cells belonging to one or more target/candidate base stations. The corresponding functions may be applied separately based on UE capability.

For another example, in the LTM candidate addition/modification/release process based on the XnAP signaling, the source/serving base station and the target/candidate base station may be configured with a unique LTM candidate configuration identification information value.

For example, the source/serving base station/gNB-CU may determine the LTM candidate configuration identification information associated with the cell belonging to the corresponding source/serving base station/gNB-CU/gNB-DU (or the corresponding candidate cell global ID (e.g., NR CGI)).

For another example, the source/serving base station/gNB-CU may determine/instruct the LTM candidate configuration identification information associated with the cell belonging to the target/candidate base station/gNB-CU/gNB-DU (or the corresponding candidate cell global ID (e.g., NR CGI)).

For another example, the source/serving base station/gNB-CU may propose/instruct the LTM candidate configuration identification information associated with the cell belonging to the target/candidate base station/gNB-CU/gNB-DU (or the corresponding candidate cell global ID (e.g., NR CGI)). An XnAP message (for example, a handover request or a new XnAP message distinct from the handover request (e.g., LTM candidate addition request)) for requesting the LTM candidate addition/modification transmitted by the source base station/gNB-CU to the target/candidate base station/gNB-CU may include a suggested/indicated/possible/available/unused value/range/list for the LTM candidate configuration identification information associated with the candidate cell identifier belonging to the target/candidate base station/gNB-CU/gNB-DU (or the candidate cell global ID (e.g., NR CGI, NR Cell ID, or PCI) and/or the cell belonging to the target/candidate base station/gNB-CU/gNB-DU (or the candidate cell global ID (e.g., NR CGI), NR Cell ID or PCI).

For another example, the target/candidate base station/gNB-CU may determine the LTM candidate configuration identification information associated with the cell belonging to the target/candidate base station/gNB-CU/gNB-DU (or the corresponding candidate cell global ID (e.g., NR CGI)). The target/candidate base station/gNB-CU may determine the LTM candidate configuration identification information associated with the cell belonging to the corresponding target/candidate base station/gNB-CU/gNB-DU (or the corresponding candidate cell global ID (e.g., NR CGI)) by considering/using information received from the source/serving base station/gNB-CU (for example, the suggested/indicated/possible/available/unused value/range/list for the LTM candidate configuration identification information associated with the cell belonging to the target/candidate base station/gNB-CU/gNB-DU (or the candidate cell global ID (e.g., NR CGI), NR Cell ID or PCI)). For example, the LTM candidate configuration identification information value associated with the cell belonging to the corresponding target/candidate base station/gNB-CU/gNB-DU may be determined from among the received suggested/indicated/possible/available/unused value LTM candidate configuration identification information /range/list.

For another example, the target/candidate base station/gNB-CU may determine the LTM candidate configuration identification information associated with the cell belonging to the target/candidate base station/gNB-CU/gNB-DU (or the corresponding candidate cell global ID (e.g. NR CGI)). The target/candidate base station/gNB-CU may determine the LTM candidate configuration identification information associated with the cell belonging to the corresponding target/candidate base station/gNB-CU/gNB-DU(or the corresponding candidate cell global ID (e.g., NR CGI)) by considering/using the information received from the source/serving base station/gNB-CU (for example, the value/range/list of the LTM candidate configuration identification information associated with the cell belonging to the source/serving base station/gNB-CU/gNB-DU (or the candidate cell global ID (e.g., NR CGI), NR Cell ID, PCI)). For example, the LTM candidate configuration identification information value associated with the cell belonging to the corresponding target/candidate base station/gNB-CU/gNB-DU may be determined from among values that are other than the received LTM candidate configuration identification information value/range/list associated with the cell belonging to the source/serving base station/gNB-CU/gNB-DU.

For another example, the foregoing LTM candidate configuration identification information (or the corresponding list) associated with the cell belonging to the source/serving base station/gNB-CU/gNB-DU may be included in an RRC context (e.g., the handover preparation information message) involved in the handover request message. Alternatively, the foregoing LTM candidate configuration identification information (or the corresponding list) associated with the cell belonging to the source/serving base station/gNB-CU/gNB-DU may be included in the handover request message as the information element other than the RRC context.

For another example, the target/candidate base station/gNB-CU may suggest/instruct the LTM candidate configuration identification information associated with the cell belonging to the target/candidate base station/gNB-CU/gNB-DU (or the corresponding candidate cell global ID (e.g., NR CGI)) information and the cell belonging to the target/candidate base station/gNB-CU/gNB-DU (or the corresponding candidate cell global ID (e.g., NR CGI)) to the source/serving base station/gNB-CU.

For another example, the source/serving base station/gNB-CU may perform rejection/reinstruction/confirmation for the LTM candidate configuration identification information associated with the cell belonging to the target/candidate base station/gNB-CU/gNB-DU (or the corresponding candidate cell global ID (e.g., NR CGI)) determined by the target/candidate base station/gNB-CU and transmit it to the target/candidate base station/gNB-CU.

For another example, the target/candidate base station/gNB-CU may transmit an acknowledgement XnAP message (for example, a handover request acknowledge or a new XnAP message distinct from the handover request acknowledge (e.g., LTM candidate addition request acknowledge)) of the XnAP message for requesting the LTM candidate addition/modification (for example, a handover request or a new XnAP message distinct from the handover request (e.g., LTM candidate addition request)) to the source/serving base station. The corresponding XnAP message may be transmitted including response/acknowledgement information through an LTM information request acknowledgement information element (or information element group). The corresponding XnAP message may include an LTM candidate configuration (or one or more sub-information elements included in the corresponding configuration). Here, the LTM candidate configuration (LTM-Candidate) information element (IE) refers to configuration information related to the LTM candidate configuration to be added/modified. The LTM candidate configuration (LTM-Candidate) information element (IE) may include i) ltm-CandidateId indicating the LTM candidate configuration in the sub-configuration information, ii) ltm-CandidateConfig indicating the RRC reconfiguration message/information element used to configure one LTM candidate cell, iii) ltm-CandidatePCI indicating a special PCI included in ltm-CandidateConfig, iv) ltm-DL-OrJointTCI-StateToAddModList/ltm-UL-TCI-StatesToAddModList indicating a list of TCI states to be added/modified for the LTM, v) ltm-ConfigComplete indicating whether the LTM candidate configuration is complete, vi) ltm-EarlyUL-SyncConfig indicating information used to perform early uplink synchronization, and vii) ltm-SSB-Config indicating information for instructing the SS/PBCH block configuration used for L1 measurement..

Hereinafter, another embodiment of the disclosure will be described.

Typical LTM technology supports Primary Cell (PCell) change in non- Carrier Aggregation (CA) and non-Dual Connectivity (DC) scenarios, PCell and Secondary Cell (Scell) change in a CA scenario, and PCell and Master Cell Group (MCG) change in a DC scenario, and intra-secondary node (SN) Primary Secondary Cell Group (SCG) Cell (PSCell) without MN (Mater Node) participation and SCG SCell change. In the typical LTM technology, LTM for simultaneous PCell and PSCell change is not supported. In NR-DC, the UE was able to receive two independent LTM configurations (LTM-config). One is an LTM configuration associated with the MCG, and the other is an LTM configuration associated with the SCG. For example, the LTM configuration associated with the MCG may be configured so that all the LTM candidate cells included in the corresponding LTM configuration can belong to the master base station/gNB-CU. The LTM configuration associated with the SCG may be configured so that all the LTM candidate cells included in the corresponding LTM configuration can belong to the secondary base station/gNB-CU. In this way, the intra-base station LTM configuration included only the LTM candidate cell belonging to the corresponding base station/gNB-CU in the LTM configuration. Because the LTM configuration included only the LTM candidate cell belonging to the corresponding base station/gNB-CU in the LTM configuration (LTM-config), it was impossible to support the inter-base station LTM. Accordingly, the typical technology needs a change to support the inter-base station LTM.

For example, the base station may instruct information for identifying whether the corresponding LTM configuration is the LTM configuration associated with the MCG or the LTM configuration associated with the SCG to the UE.

For another example, the LTM candidate cell included in the corresponding LTM configuration for the LTM configuration associated with the MCG may be allowed to be included in the base station/gNB-CU rather than the master base station/gNB-CU. If the LTM configuration associated with the MCG includes the LTM candidate cell belonging to the secondary base station/gNB-CU when the DC is configured in the UE, it is possible to support a PCell and PSCell change through the LTM. When the UE receives an LTM cell switch command, the SCG configuration configured in the UE may be released. The UE may perform the LTM cell change from the previous PSCell to the PCell.

For another example, the LTM candidate cell included in the corresponding LTM configuration for the LTM configuration associated with the MCG may be allowed to be included in the base station/gNB-CU rather than the master base station/gNB-CU and the base station/gNB-CU rather than the secondary base station/gNB-CU. When the UE receives the LTM cell switch command, the SCG configuration configured in the UE may be released.

For another example, the LTM candidate cell included in the corresponding LTM configuration for the LTM configuration associated with the MCG may be allowed to be included in the base station/gNB-CU rather than the master base station/gNB-CU and the base station/gNB-CU rather than the secondary base station/gNB-CU. When the UE receives the LTM cell switch command, the SCG configuration configured in the UE may be maintained. If the target/candidate base station/gNB-CU decides to maintain the UE context within the secondary node, the target/candidate base station/gNB-CU may transmit an SN Addition Request message to the secondary base station/gNB-CU. The corresponding message may contain SN UE XnAP ID and the UE context in the source secondary node configured by the source master node as references for the UE context. The corresponding message may include i) the source master node ID (Source M-NG-RAN node ID) to instruct that the corresponding secondary node addition preparation procedure has been triggered in relation to the LTM and/or to make the secondary node identify the request related to the same UE and ii) the source master node UE XnAP ID information allocated by the source master node. The target/candidate base station/gNB-CU may provide candidate PSCell information (e.g., NR CGI) recommended by the corresponding base station. The corresponding secondary base station/gNB-CU may include information for identifying whether the corresponding RRC configuration is a complete RRC configuration or a delta configuration for a reference configuration. The target/candidate base station/gNB-CU may transmit the handover request acknowledge message to the source/serving base station/gNB-CU. The corresponding message may include information for indicating that the UE context is maintained in the secondary node.

For another example, the LTM candidate cell included in the corresponding LTM configuration for the LTM configuration associated with the SCG may be allowed to be included in the base station/gNB-CU rather than the secondary base station/gNB-CU. However, the corresponding allowed base station/gNB-CU may be limited to the base station/gNB-CU rather than the master base station/gNB-CU. Thus, the inter-Secondary Node (SN) PSCell and SCG Scell change is supported without mater node (MN) participation (or maintaining the MN). The previous PCell is prevented from switching to the PSCell. If the previous PCell is switched over to the PSCell, the master base station is released. Accordingly, it becomes difficult for the PSCell to operate independently.

The LTM candidate configuration refers to a configuration associated with one LTM candidate cell. The LTM candidate configuration may be a complete LTM candidate configuration or a delta/difference configuration relatively to the LTM reference configuration. The typical LTM reference configuration refers to a common configuration within the same cell group, to configured non-complete LTM candidate configurations. In addition, the LTM reference configuration is used by the UE to generate the complete LTM candidate configuration by applying the LTM candidate configuration on top of the LTM reference configuration (When ltm-ConfigComplete is not included for an LTM candidate configuration, before an LTM cell switch is triggered a UE implementation may generate and store an RRC reconfiguration message by applying the received LTM candidate configuration on top of the LTM reference configuration, and the stored RRC reconfiguration message is applied when the LTM cell switch is triggered.) The inter-base station LTM should provide the LTM candidate configuration for the cells belonging to different base stations. Accordingly, there is a need to define a method for effectively processing the LTM reference configuration that provides a common configuration within one cell group.

For example, the inter-base station LTM may be provided by setting the LTM reference configuration as a common configuration applied (or considered) to cell groups other than the same cell group (in addition to the same cell group). The LTM reference configuration may be defined as a common configuration for the LTM candidate configuration associated with the LTM candidate cell belonging to one or more base station/gNB-CU/cell group included in the LTM configuration (LTM-config) including the corresponding LTM reference configuration.

For example, the XnAP message for requesting the LTM candidate addition/modification transmitted by the source base station/gNB-CU to the target/candidate base station/gNB-CU may be transmitted including one LTM reference configuration for the LTM candidate configuration associated with the cell belonging to the source/serving base station/gNB-CU/gNB-DU and/or the cell belonging to the target/candidate base station/gNB-CU/gNB-DU. The target/candidate base station/gNB-CU may be taken into account when the LTM candidate configuration associated with the cell belonging to the target/candidate base station/gNB-CU/gNB-DU (or the sub-information element/parameter included in the corresponding configuration) is generated.

For another example, the XnAP message for requesting the LTM candidate addition/modification transmitted by the source base station/gNB-CU to the target/candidate base station/gNB-CU may be transmitted including information for instructing the LTM reference configuration request. The target/candidate base station/gNB-CU may transmit an acknowledgement/response XnAP message of the XnAP message for requesting the LTM candidate addition/modification, together with the LTM reference configuration. The source/serving base station/gNB-CU may take it into account when generating the LTM candidate configuration associated with the cell belonging to the source/serving base station/gNB-CU/gNB-DU (or the sub-information element/parameter included in the corresponding configuration).

For another example, the LTM configuration (LTM-config) may define and use an LTM reference configuration parameter (e.g., ltm-ReferenceConfiguration-r19*) for one or more cell groups distinct from the LTM reference configuration parameter (ltm-ReferenceConfiguration-r18) in the same cell group. In the typical LTM technology, the LTM reference configuration parameter (ltm-ReferenceConfiguration-r18) in the same cell group was instructed through the reference configuration parameter providing the common configuration within the same cell group (ReferenceConfiguration-r18: The IE ReferenceConfiguration is used provide a configuration that is common, within the same cell group, to all configured non-complete candidate configurations), and the corresponding reference configuration parameter included the RRC reconfiguration information element (ReferenceConfiguration-r18 ::= OCTET STRING (CONTAINING RRCReconfiguration)).

For another example, the LTM reference configuration for the source/serving base station/cell group and the LTM reference configuration for the target/candidate base station/cell group may be used separately.

For example, the LTM reference configuration for the target/candidate base station/cell group may be additionally defined and used besides the LTM reference configuration for the source/serving base station/cell group. In other words, as shown in the following Table 5, the LTM configuration (LTM-config) may include the LTM reference configuration parameter (ltm-ReferenceConfiguration-r18) within one cell group for the LTM candidate configuration belonging to the source/serving base station/gNB-CU (for example, ltm-CandidateConfig-r18 included in LTM-Candidate-r18 or LTM-Candidate-r18), and/or the LTM reference configuration parameter(e.g., ltm-InterCU-ReferenceConfiguration-r19) within one cell group for the LTM candidate configuration belonging to the target/candidate base station/gNB-CU distinct from the source/serving base station/gNB-CU. Here, the ltm-InterCU-ReferenceConfiguration-r19 is for the convenience of description, and may be referred to as any other names. Like the ltm-ReferenceConfiguration-r18, the ltm-InterCU-ReferenceConfiguration-r19 may also be instructed through the reference configuration parameter (ReferenceConfiguration-r18) providing the common configuration within the same cell group.

Below, Tables 5 to 7 show examples of the LTM configuration (LTM-Config) information element for supporting the inter-base station LTM.

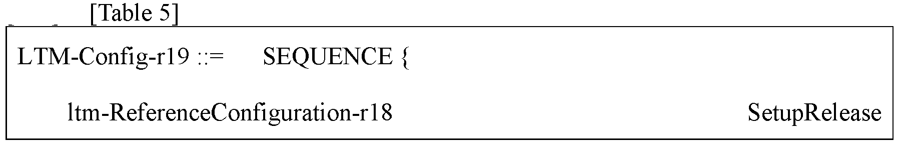

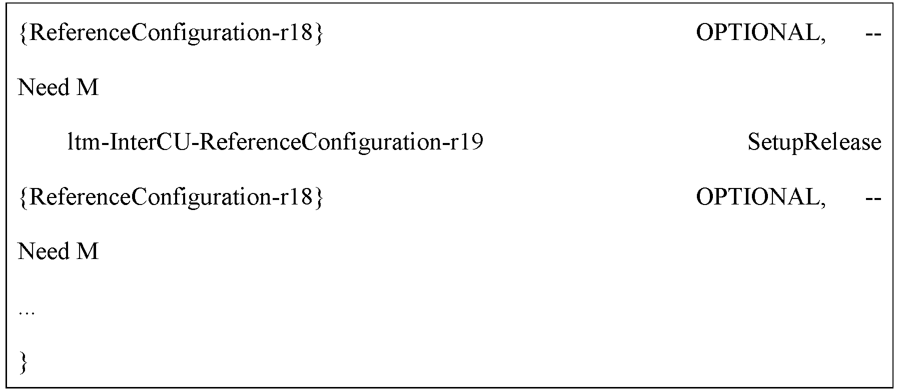

For another example, as shown in the following Table 6, the LTM configuration (LTM-config) may define and include i) the reference configuration parameter (ReferenceConfiguration-r18) within one cell group for the LTM candidate configuration belonging to the source/serving base station/gNB-CU and ii) the LTM reference configuration parameter (ltm-ReferenceConfiguration-r19) including the reference configuration parameter (e.g., InterCU-ReferenceConfiguration-r19) within one cell group for the LTM candidate configuration belonging to the target/candidate base station/gNB-CU distinct from the source/serving base station/gNB-CU. Here, InterCU-ReferenceConfiguration-r19is for the convenience of description, and may be referred to as any other names.

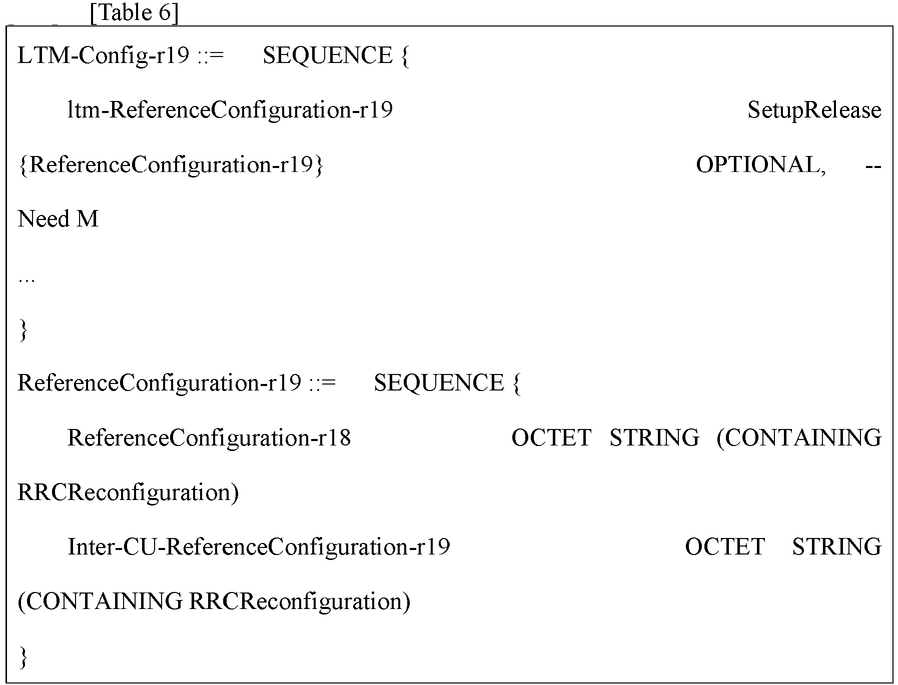

For another example, as shown in the following Table 7, the LTM configuration (LTM-config) may define and include i) the reference configuration parameter (ReferenceConfiguration-r18) within one cell group for the LTM candidate configuration belonging to the source/serving base station/gNB-CU and ii) the LTM reference configuration parameter (ltm-ReferenceConfiguration-r19) including the reference configuration parameter (e.g. InterCU-ReferenceConfiguration-r19) within one cell group for the LTM candidate configuration belonging to the target/candidate base station/gNB-CU distinguished from the source/serving base station/gNB-CU. The corresponding LTM reference configuration parameter (ltm-ReferenceConfiguration-r19) may provide the corresponding reference configuration through the cell group configuration information element.

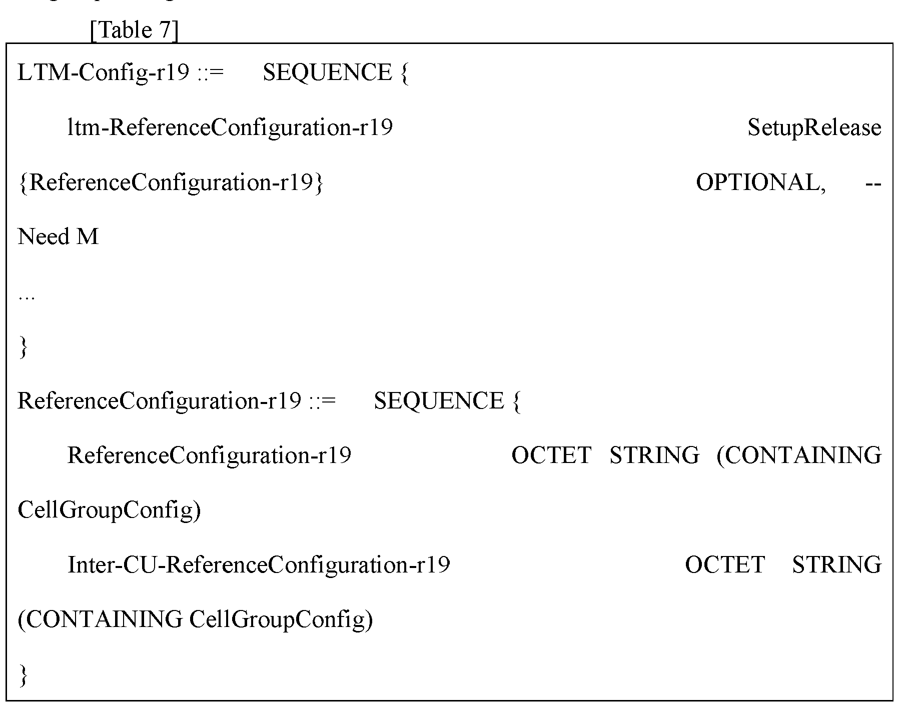

Meanwhile, an XnAP message for requesting the LTM candidate addition/modification transmitted by the source base station/gNB-CU to the target/candidate base station/gNB-CU (for example, a handover request or a new XnAP message distinct from the handover request (e.g., LTM candidate addition request)) may be transmitted including the LTM reference configuration for the LTM candidate configuration associated with the cell belonging to the source/serving base station/gNB-CU/gNB-DU (or the corresponding candidate cell global ID (e.g., NR CGI)). The target/candidate base station/gNB-CU may consider it when generating the LTM reference configuration for the LTM candidate configuration associated with the cell belonging to the target/candidate base setation/gNB_CU/gNB-DU.

For another example, the XnAP message for requesting the LTM candidate addition/modification transmitted by the source base station/gNB-CU to the target/candidate base station/gNB-CU may be transmitted including information for instruction to request the LTM reference configuration for the LTM candidate configuration associated with the cell belonging to the target/candidate base station/gNB-CU/gNB-DU (or the corresponding candidate cell global ID (e.g., NR CGI)). The target/candidate base station/gNB-CU may generate/include and provide/transmit the LTM reference configuration for the LTM candidate configuration associated with the cell belonging to the target/candidate base station/gNB-CU/gNB-DU in the acknowledgement/response XnAP message of the XnAP message for requesting the LTM candidate addition/modification.

For another example, the LTM reference configuration for the source/serving base station/cell group and the LTM reference configuration for the target/candidate base station/cell group may make the sub-information element/parameters included in the corresponding configuration have the same value.

For another example, the LTM reference configuration for the source/serving base station/cell group and the LTM reference configuration for the target/candidate base station/cell group may ensure that at least one of the sub-information element/parameters included in the corresponding configuration have the same value for a specific information element/parameter.

For another example, the LTM reference configuration for the source/serving base station/cell group and the LTM reference configuration for the target/candidate base station/cell group may ensure that the sub-information element/parameters included in the corresponding configuration have different values.

For another example, the XnAP message for requesting the LTM candidate addition/modification transmitted by the source/serving base station/gNB-CU to the target/candidate base station/gNB-CU may include information for instructing whether to generate a complete/full configuration or a delta configuration for a reference configuration (or the corresponding configuration). The target/candidate base station/gNB-CU may consider it when generating the LTM reference configuration for the LTM candidate configuration associated with the cell belonging to the target/candidate base station/gNB-CU/gNB-DU.

For another example, the target/candidate base station/gNB-CU may transmit an acknowledgement/response XnAP message of the XnAP message for requesting the LTM candidate addition/modification, including the information for instructing whether to generate a complete configuration or a delta configuration for the reference configuration (or the corresponding configuration), to the source/serving base station/gNB-CU.

For another example, the XnAP message for requesting the LTM candidate addition/modification transmitted by the source/serving base station/gNB-CU to the target/candidate base station/gNB-CU may be transmitted including information for instruction to request the LTM candidate configuration generation based on one of the source/serving base station LTM reference configuration or the target/candidate base station LTM reference configuration for the LTM candidate configuration associated with the cell belonging to the target/candidate base station/gNB-CU/gNB-DU (or the corresponding candidate cell global ID (e.g., NR CGI)). The target/candidate base station/gNB-CU may transmit an acknowledgement/response XnAP message of the XnAP message for requesting the LTM candidate addition/modification, including the LTM reference configuration for the LTM candidate configuration associated with the cell belonging to the target/candidate base station/gNB-CU/gNB-DU, while considering it.

For another example, the target/candidate base station/gNB-CU may include information for instructing whether the LTM candidate configuration associated with the cell belonging to the target/candidate base station/gNB-CU/gNB-DU is a complete configuration or a delta configuration for the reference configuration, in an acknowledgement/response XnAP message of the XnAP message for requesting the LTM candidate addition/modification.

For another example, the target/candidate base station/gNB-CU may include information for identifying whether the LTM candidate configuration is generated based on the LTM reference configuration associated with the source/serving base station/gNB-CU or the LTM reference configuration associated with the target/candidate base station/gNB-CU, in an acknowledgement/response XnAP message of the XnAP message for requesting the LTM candidate addition/modification.

Meanwhile, as described above, the typical LTM technology supports PCell change in non-CA and non-DC scenarios, PCell and Scell change in a CA scenario, PCell and MCG SCell change in a DC scenario, and intra-Secondary Node (SN) PSCell and SCG SCell change without master node (MN) participation. In the typical LTM technology, the LTM for simultaneous PCell and PSCell change is not supported. In the NR-DC, the UE may receive two independent LTM configurations (LTM-config). One is the LTM configuration associated with the MCG, and the other is the LTM configuration associated with the SCG. The UE may maintain two independent LTM UE variables (VarLTM-Config) associated with each LTM configuration. One is the LTM configuration associated with the MCG, and the other is the LTM configuration associated with the SCG. For example, the LTM configuration associated with the MCG may be configured so that all the LTM candidate cells included in the corresponding LTM configuration can belong to the master base station/gNB-CU. The LTM configuration associated with the SCG may be configured so that all the LTM candidate cells included in the corresponding LTM configuration can belong to the secondary base station/gNB-CU. In this way, the intra-base station LTM configuration may include only the LTM candidate cell belonging to the corresponding base station/gNB-CU in the LTM configuration. Because the LTM configuration (LTM-config) includes only the LTM candidate cell belonging to the corresponding base station/gNB-CU, the inter-base station LTM is not supported. Therefore, to support the inter-base station LTM, there is a need to provide a method for processing the UE variables supporting the corresponding LTM configuration.

For example, when the DC is configured in the UE, the LTM configuration for supporting the inter-base station LTM may be configured for only one of the MCG and the SCG. Alternatively, the LTM configuration for supporting the inter-base station LTM may be configured not for both the MCG and the SCG.

For example, the base station may instruct information for identifying whether the corresponding LTM configuration is the LTM configuration associated with the MCG or the LTM configuration associated with the SCG, to the UE.

For another example, if the LTM candidate cell belonging to the secondary base station/gNB-CU is included in the LTM configuration associated with the MCG when the DC is configured in the UE, the UE may be configured not to include the LTM configuration associated with the SCG.

For another example, if the LTM configuration associated with the SCG is instructed to the UE storing the LTM configuration associated with the MCG when the DC is configured in the UE, the UE may remove the LTM configuration associated with the MCG.

For another example, if the LTM configuration associated with the MCG is instructed to the UE storing the LTM configuration associated with the SCG when the DC is configured in the UE, the UE may remove the LTM configuration associated with the SCG.

For another example, the UE may not maintain two independent LTM UE variables (VarLTM-Config) associated with the LTM configuration for supporting the simultaneous inter-base station LTM.

For another example, the UE may maintain one LTM UE variables (VarLTM-Config) associated with the MCG or the SCG at a time (at one point/time).

For another example, the LTM configuration (LTM-Config) may include index/ID information for identifying the corresponding LTM configuration (LTM-Config).

For another example, if the current LTM UE variable (VarLTM-Config) includes an index/ID value for identifying the LTM configuration included in the received LTM configuration, the UE may replace the LTM configuration in the LTM UE variable according to the received LTM configurations.

For another example, if the current LTM UE variable (VarLTM-Config) includes an index/ID value for identifying the LTM configuration included in the received LTM configuration, the UE may replace the LTM configuration in the LTM UE variable according to the received LTM configurations. Otherwise, the UE may add the received LTM configuration to the LTM UE variable.

For another example, if the current LTM UE variable (VarLTM-Config) includes an index/ID value for identifying the LTM configuration included in the received LTM configuration, the UE may replace the LTM configuration in the LTM UE variable according to the received LTM configurations. Otherwise, the UE may remove the stored LTM UE variable. The UE may add the received LTM configuration to the LTM UE variable.

For another example, the reference configuration based on the foregoing LTM reference configuration processing method may be stored as included in the LTM UE variable.

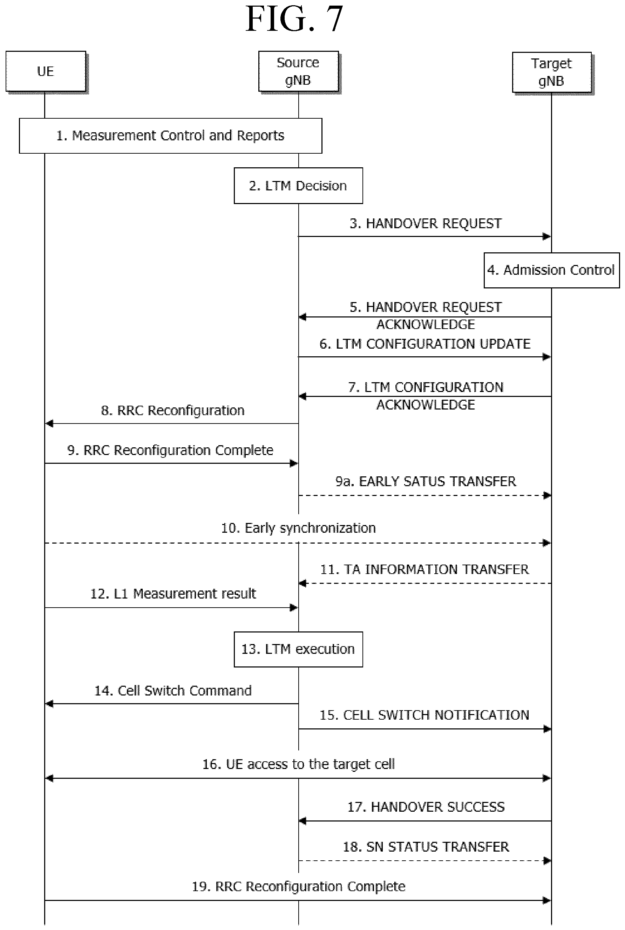

**FIG. 7** **illustrates the procedure for inter-gNB LTM according to an embodiment of the disclosure.**

Below, the procedure inter-gNB LTM will be described in detail with reference to FIG. 7.
1. The UE sends a MeasurementReport message (L3 measurement result) to the source gNB containing measurements of neighbouring cells.
2. The source gNB decides to configure inter-gNB LTM.
3. The source gNB requests inter-gNB LTM for one or more candidate cells belonging to one or more candidate gNB(s). The source gNB initiates a HANDOVER REQUEST message per candidate cell containing one candidate cell ID and the CSI resource configuration for subsequent LTM. The source gNB may request the candidate gNB(s) to provide the CSI-RS configuration.
4. Admission Control may be performed by the candidate gNB(s).
5. The candidate gNB(s) prepares the LTM configuration(s) and sends inter-gNB response (HO REQUEST ACKNOWLEDGE) to the source gNB including the generated RRC configurations for the accepted candidate cell. The candidate gNB(s) may also include the CSI-RS configuration upon request.
6. The source gNB sends an LTM CONFIGURATION UPDATE message to the candidate gNB(s) to update the LTM configurations of candidate cell(s). The source gNB may include the common CSI-RS resource configuration.
7. The candidate gNB(s) sends the LTM CONFIGURATION UPDATE ACKNOWLEDGE message to the source gNB. The candidate gNB(s) may also provide the CSI-RS report configuration.
8. The source gNB sends an RRCReconfiguration message to the UE.
9. The UE stores the LTM candidate configurations and sends an RRCReconfigurationComplete message to the source gNB.
9a If early data forwarding is applied, the source gNB sends the EARLY STATUS TRANSFER message.
10/11. Early synchronization to some LTM candidate cell(s) belonging to the candidate gNB(s) may be performed. The candidate gNB(s) sends the TA INFORMATION TRANSFER message to the source gNB if early TA acquisition is performed to the candidate gNB(s).
12. The UE performs L1 measurements on the configured LTM candidate cell(s) and transmits L1 measurement reports to the source gNB. L1 measurement should be performed as long as RRC reconfiguration (step 8) is applicable.
13. The source gNB determines to initiate inter-gNB LTM.
14. The source gNB decides to execute cell switch to a target cell and transmits an LTM cell switch command MAC CE triggering cell switch by including a target configuration ID which indicates the index of the candidate configuration of the target cell, a beam indicated with a TCI state or beams indicated with DL and UL TCI states, and a timing advance command for the target cell, if available. The UE switches to the target cell and applies the candidate configuration indicated by the target configuration ID.
15. The source gNB sends the CELL SWITCH NOTIFICATION message to the target gNB to indicate the initiation of Cell Switch command to the UE.
16. The target gNB detects the UE access. The UE performs the random access procedure towards the target cell, if UE does not have valid TA of the target cell as specified in clause 5.18.35 of TS 38.321[6].
17/18. The target gNB sends the HANDOVER SUCCESS message to the source gNB to inform that the UE has successfully accessed the target cell. In return, the source gNB sends the SN STATUS TRANSFER message following the principles described in step 7 of Intra-AMF/UPF Handover in clause 9.2.3.2.1.
19. The UE sends an RRCReconfigurationComplete message to the target gNB.

Hereinafter, operations related to the LTM configuration method in the inter-base station (inter-gNB) LTM procedure, as related to FIG. 7, will be described.

The source base station transmits a handover request message including a layer 1 (L1)/layer 2 (L2) triggered mobility (LTM) information request to a target base station. In response to the handover request message, the target base station transmits a handover request acknowledge message including an LTM information response to the source bas station. Then, the source base station transmits at least a portion of the received LTM information response received from the target station to the UE through a radio resource control (RRC) message.

The LTM information request transmitted by the source base station to the target base station may include at least one of i) a reference configuration, ii) at least one LTM candidate cell identity (ID), and iii) at least one LTM configuration ID. Here, the at least one LTM candidate cell ID and the at least one LTM configuration ID may be included in the LTM information request in the form of a list. In addition, the at least one LTM candidate cell ID may be at least one new radio (NR) cell global identifier (CGI), and the at least one NR CGI may be to identify up to eight LTM candidate cells.

The at least one LTM configuration ID may each have a unique value between the source base station and all the target base stations.

Meanwhile, the handover request message transmitted by the source base station may be transmitted for each candidate cell of the target base station, and the target base station may receive the handover request message.

Meanwhile, in NR-DC, the LTM candidate cell included in the LTM configuration for the corresponding LTM configuration associated with the MCG may be allowed to be included in a base station rather than the master base station or in a base station rather than a secondary base station. When the UE receives the LTM cell switch command, the SCG configuration configured in the UE may be maintained. When the target base station determines to maintain the UE context in the secondary node (SN), i.e., in the secondary base station, the target base station may transmit an "SN Addition Request" message to the secondary base station. In other words, the target base station that received the handover request message may transmit a secondary node (SN) addition request message to the secondary base station.

Further, the LTM candidate cell included in the LTM configuration for the corresponding LTM configuration associated with the MCG may be allowed to be included in a base station rather than the master base station and a base station rather than a secondary base station, and the SCG configuration configured in the UE may be released when the UE receives the LTM cell switch command. In this case, the target base station that received the handover request message may transmit an SN release request message to the secondary base station.

As described above, the LTM information response transmitted by the target base station to the source base station may include at least one of LTM candidate configuration information and reference configuration information.

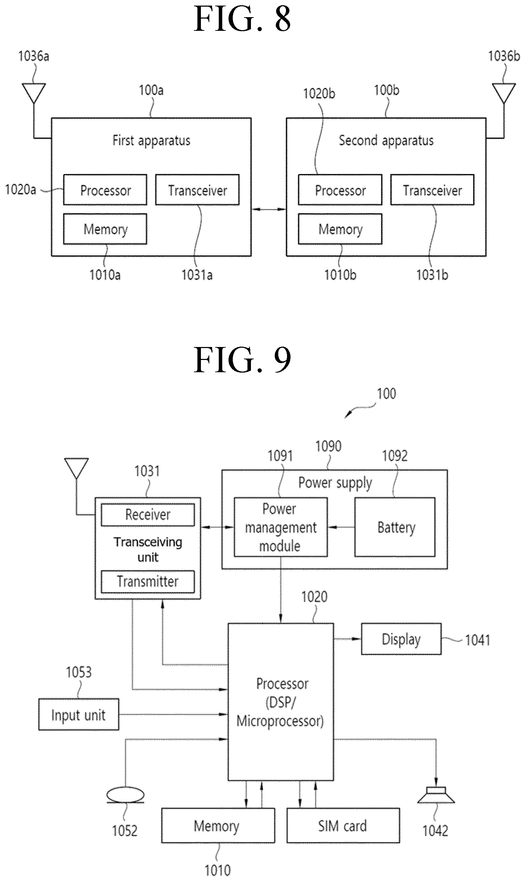

**FIG. 8** **is a block diagram showing apparatuses according to an embodiment of the disclosure.**

Referring to FIG. 8, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 9** **is a block diagram showing a terminal (e.g., user equipment: UE) according to an embodiment of the disclosure.**

In particular, FIG. 9 illustrates the previously described apparatus of FIG. 8 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

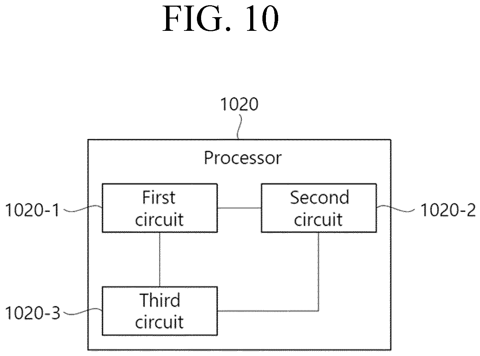

**FIG. 10** **is a block diagram of a processor in accordance with an embodiment.**

Referring to FIG. 10, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

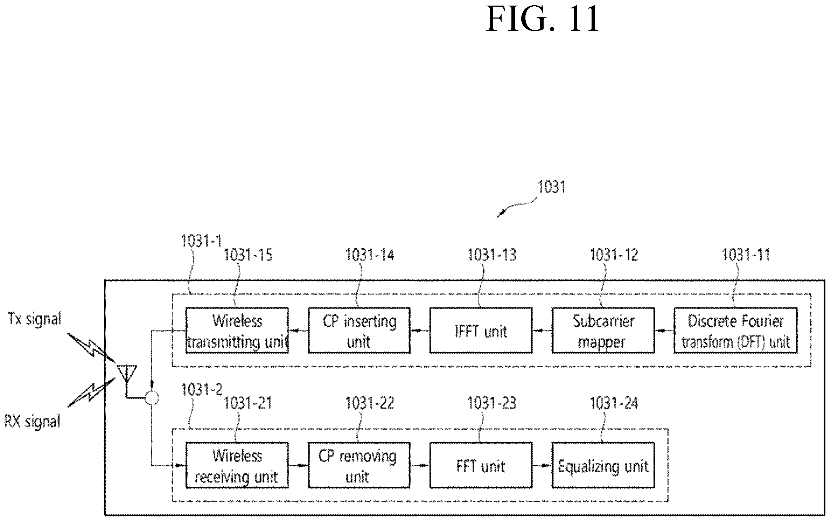

**FIG. 11** **is a detailed block diagram of a transceiver of a first apparatus shown in** **FIG. 8** **or a transceiving unit of an apparatus shown in** **FIG. 9****.**

Referring to FIG. 11, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, an LTM candidate configuration is effectively configured to support inter-base station LTM for a UE in a wireless communication system, thereby supporting subsequent LTM.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of operating a source base station in a wireless communication system, the method comprising:
transmitting a handover request message comprising a layer 1 (L1)/layer 2 (L2) triggered mobility (LTM) information request to a target base station;
receiving a handover request acknowledge message comprising an LTM information response from the target base station; and
transmitting at least a portion of the received LTM information response to a user equipment (UE) through a radio resource control (RRC) message.

2. The method of claim 1, wherein the LTM information request comprises at least one of a reference configuration, at least one LTM candidate cell identity (ID), and at least one LTM configuration ID.

3. The method of claim 2, wherein:
the at least one LTM candidate cell ID and the at least one LTM configuration ID are included as a list form in the LTM information request;
the at least one LTM candidate cell ID comprises at least one new radio (NR) cell global identifier (CGI); and
the at least one NR CGI is to identify up to eight LTM candidate cells.

4. The method of claim 3, wherein the at least one LTM configuration ID each has a unique value between the source base station and all the target base stations.

5. The method of claim 1, wherein the handover request message is transmitted for each candidate cell of the target base station.

6. The method of claim 1, wherein, after the handover request message is transmitted to the target base station, a secondary node (SN) addition request message is transmitted from the target base station to a secondary base station.

7. The method of claim 1, wherein after the handover request message is transmitted to the target base station, a secondary node (SN) release request message is transmitted from the target base station to a secondary base station.

8. The method of claim 1, wherein the LTM information response comprises at least one of LTM candidate configuration information and reference configuration information.

9. A method of operating a target base station in a wireless communication system, the method comprising,
receiving a handover request message comprising a layer 1 (L1)/layer 2 (L2) triggered mobility (LTM) information request from a source base station;
transmitting a handover request acknowledge message comprising an LTM information response to the source base station; and
transmitting at least a portion of the transmitted LTM information response to a user equipment (UE) through a radio resource control (RRC) message.

10. The method of claim 9, wherein the LTM information request comprises at least one of a reference configuration, at least one LTM candidate cell identity (ID), and at least one LTM configuration ID.

11. The method of claim 10, wherein:
the at least one LTM candidate cell ID and the at least one LTM configuration ID are included as a list form in the LTM information request;
the at least one LTM candidate cell ID comprises at least one new radio (NR) cell global identifier (CGI); and
the at least one NR CGI is to identify up to eight LTM candidate cells.

12. The method of claim 11, wherein the at least one LTM configuration ID each have a unique value between the source base station and all the target base stations.

13. The method of claim 9, wherein the handover request message is transmitted for each candidate cell of the target base station.

14. A source base station in a wireless communication system, comprising:
at least one processor; and
at least one memory configured to store instructions and operably electrically connectable to the at least one processor,
wherein operations performed based on the instructions executed by the at least one processor comprise:
transmitting a handover request message comprising a layer 1 (L1)/layer 2 (L2) triggered mobility (LTM) information request to a target base station;
receiving a handover request acknowledge message comprising an LTM information response from the target base station; and
transmitting at least a portion of the received LTM information response to a user equipment (UE) through a radio resource control (RRC) message.

15. A target base station in a wireless communication system, comprising:
at least one processor; and
at least one memory configured to store instructions and operably electrically connectable to the at least one processor,
wherein operations performed based on the instructions executed by the at least one processor comprise:
receiving a handover request message comprising a layer 1 (L1)/layer 2 (L2) triggered mobility (LTM) information request from a source base station;
transmitting a handover request acknowledge message comprising an LTM information response to the source base station; and
transmitting at least a portion of the transmitted LTM information response to a user equipment (UE) through a radio resource control (RRC) message.
